## Europäisches Patentamt
## European Patent Office
## Office européen des brevets

(19)

(11) Veröffentlichungsnummer: **0 152 620**
**B1**

(12)

# EUROPÄISCHE PATENTSCHRIFT

(45) Veröffentlichungstag der Patentschrift:
**12.08.87**

(51) Int. Cl.⁴: **F 16 K 11/07,** F 16 K 27/04

(21) Anmeldenummer: **84116233.2**

(22) Anmeldetag: **22.12.84**

(54) **Wegeventil.**

(30) Priorität: **06.02.84 DE 3404023**

(43) Veröffentlichungstag der Anmeldung:
**28.08.85 Patentblatt 85/35**

(45) Bekanntmachung des Hinweises auf die Patenterteilung:
**12.08.87 Patentblatt 87/33**

(84) Benannte Vertragsstaaten:
**CH DE FR GB IT LI SE**

(56) Entgegenhaltungen:
**CH-A-374 289**
**CH-A-552 755**
**DE-A-1 915 966**
**DE-U-8 230 759**
**GB-A-2 095 795**
**US-A-2 938 704**
**US-A-3 012 576**

(73) Patentinhaber: **ROBERT BOSCH GMBH, Postfach 50, D-7000 Stuttgart 1 (DE)**

(72) Erfinder: **Frötschl, Erwin, Kirchstrasse 22, D-7014 Kornwestheim (DE)**

## Beschreibung

### Stand der Technik

Die Erfindung geht aus von einem Wegeventil nach der Gattung des Hauptanspruchs. Bei einem derartigen bekannten Wegeventil (z. B. DE-A-1 915 966) ist das Ventilgehäuse mit Hilfe von Befestigungsschrauben auf einer Anschlußplatte befestigt. Das Ventilgehäuse hat zur Aufnahme der Befestigungsbohrungen einen breiten Gehäuserand. Dadurch baut es groß und wird teuer und schwer. Um ein Verdrehen des Ventilgehäuses auf der Anschlußplatte zu verhindern, sind mehrere Befestigungsschrauben notwendig, wodurch auch die Montagezeit vergrößert wird.

### Vorteile der Erfindung

Das erfindungsgemäße Wegeventil mit den kennzeichnenden Merkmalen des Hauptanspruchs hat demgegenüber den Vorteil, daß es besonders kompakt und kostengünstig baut. Es sind nur zwei Befestigungsschrauben notwendig wodurch auch eine Verdrehsicherheit des Ventilgehäuses auf einer Anschlußplatte oder Anschlußleiste gewährleistet ist. Die Befestigungsschrauben sind von der Verbraucherseite her zugänglich, wodurch die Montage erleichtert wird. Die Anschlußplatte kann direkt durch eigene Befestigungselemente auf einem Objekt montiert werden. Es ergeben sich dadurch besonders günstige Anwendungsmöglichkeiten.

Durch die in den Unteransprüchen aufgeführten Maßnahmen sind vorteilhafte Weiterbildungen und Verbesserungen der im Hauptanspruch angegebenen Merkmale möglich.

### Zeichnung

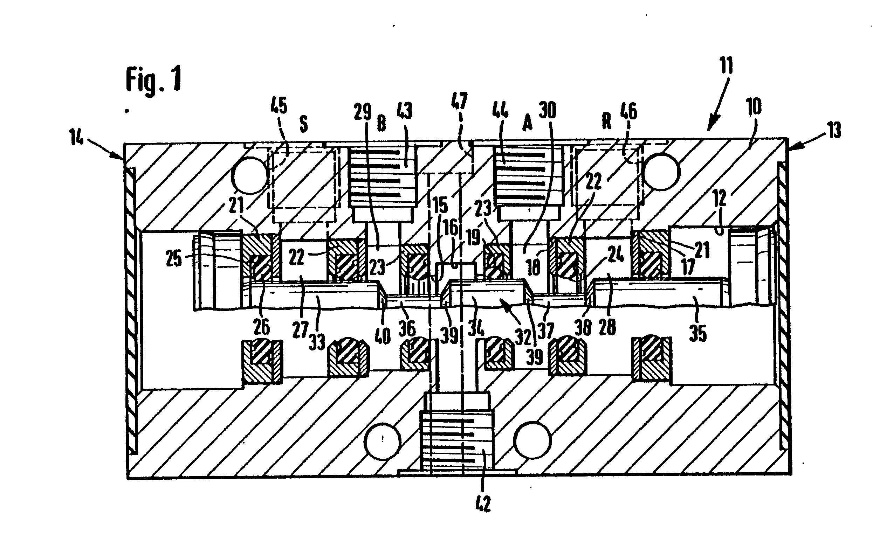

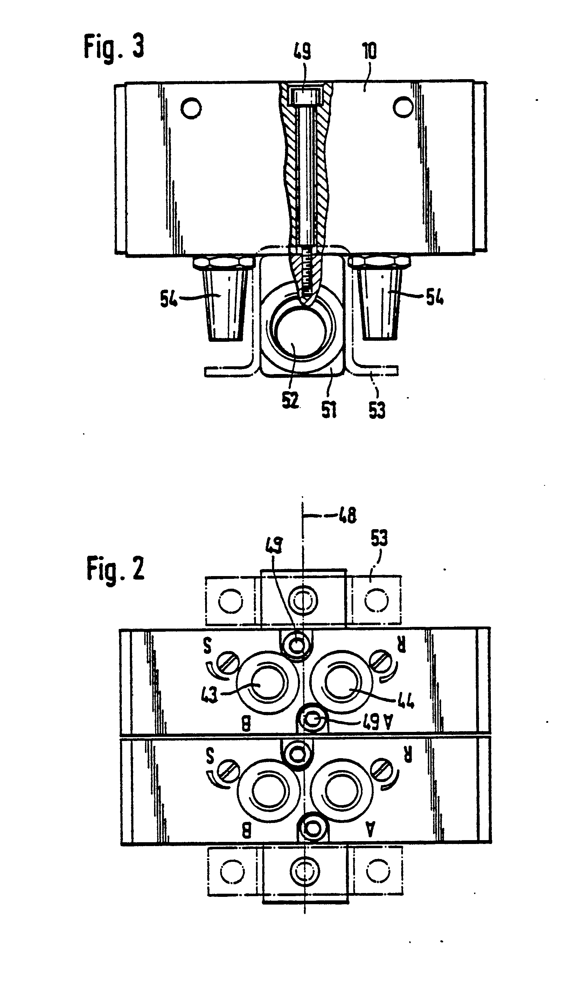

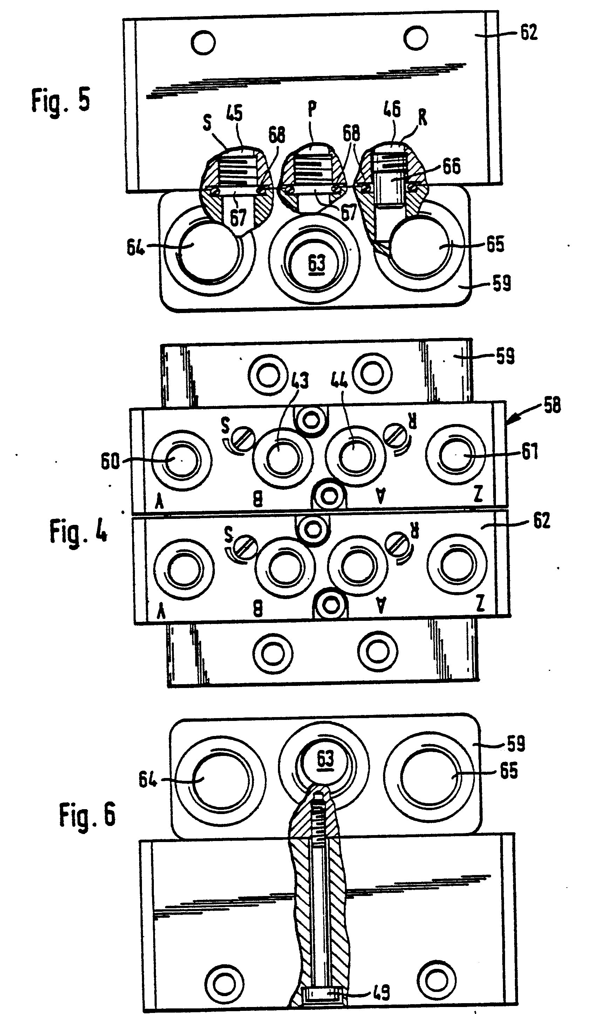

Ein Ausführungsbeispiel der Erfindung ist in der Zeichnung dargestellt und in der nachfolgenden Beschreibung näher erläutert. Es zeigen Figur 1 einen Längsschnitt durch ein Wegeventil, Figur 2 eine Anordnung von Wegeventilen auf einer Anschlußleiste, von oben gesehen, Figur 3 eine Vorderansicht nach Figur 2, Figur 4 eine Anordnung von Wegeventilen auf einer Sammelanschlußplatte, Figur 5 eine Vorderansicht nach Figur 4 und Figur 6 eine Rückansicht nach Figur 4.

### Beschreibung des Ausführungsbeispiels

Im Gehäuse 10 eines 5/2-Wegeventils 11, das als Druckluftventil eingesetzt wird, ist eine mittige, durchgehende Stufenbohrung 12 ausgebildet. Diese ist von beiden Stirnseiten 13, 14 des Gehäuses 10 her jeweils dreifach abgesetzt und hat einen mittigen Abschnitt 15 mit dem kleinsten Durchmesser. In diesem Abschnitt 15 ist eine Ringnut 16 ausgebildet, die als Zulaufkammer dient. An die Schultern 17, 18, 19 der Stufenbohrung 12 legen sich beiderseits des Abschnitts 15 Führungsscheiben 21, 22, 23 an. Diese sind an den Schultern 17, 18, 19 angeklebt und weisen je eine gleich große mittige Bohrung 24 auf. In den Bohrungen 24 der Führungsscheiben 21 22 23 sind jeweils in Ringnuten 25 Dichtringe 26 angeordnet. Die zwischen den Führungsscheiben 21, 22, 23 gebildeten Räume dienen als Steuerkammern 27, 28 und als Verbraucherkammern 29, 30. Vorteilhafterweise hat die Zulaufkammer 16 gegenüber diesen Kammern 27 bis 30 den kleinsten Durchmesser.

In den Bohrungen 24 der Führungsscheiben 21, 22, 23 ist ein Steuerschieber 32 gleitend geführt. Dieser weist drei Bunde 33, 34, 35 auf, die durch am Steuerschieber 32 ausgebildete Ringnuten 36, 37 getrennt sind. An den Bunden 33, 34, 35 befinden sich den Bingnuten 36, 37 zugewandte Steuerkanten 38, 39, 40.

Das Gehäuse 10 hat an seiner Unterseite, die einer in Figur 1 nicht dargestellten Anschlußplatte zugewandt ist, einen Zulaufanschluß 42, der in Verbindung mit der Zulaufkammer 16 steht. An der Oberseite des Gehäuses 10 sind zwei mit den Verbraucherkammern 29, 30 verbundene Verbraucheranschlüsse 43, 44 und zwei Entlüftungsanschlüsse 45, 46 ausgebildet, die mit den Steuerkammern 27, 28 verbunden sind. Der Zulaufanschluß 42 und die Verbraucheranschlüsse 43, 44 sind in einer ersten Ebene angeordnet, in der auch die Achse der Stufenbohrung 12 verläuft. Die Entlüftungsanschlüsse 45, 46 sind in einer zweiten Ebene, die parallel zur ersten Ebene verläuft, ausgebildet. Im Bereich der Zulaufkammer 16 sind im Gehäuse 10 - wie in Figur 2 gezeigt - zwei quer zur Stufenbohrung 12 verlaufende, diese aber nicht schneidende Durchgangsbohrungen 47 ausgebildet. Die Durchgangsbohrungen 47 sind diagonal zu einer gedachten, zwischen den Verbraucheranschlüssen 43, 44 verlaufenden Mittellinie 48 angeordnet. Diese Durchgangsbohrungen 47 dienen zur Aufnahme von Befestigungsschrauben 49, mit deren Hilfe das Gehäuse 10 auf einer Anschlußleiste 51 mit einer Sammelanschlußbohrung 52 - wie in Figur 3 dargestellt - befestigt ist. Die Anschlußleiste 51 kann mit Hilfe von Klammern 53 auf einem nicht dargestellten Objekt befestigt werden. Wie in Figur 3 dargestellt, sind auf der Unterseite des Gehäuses 10 in herkömmlich bekannter Weise zwei Schalldämpfer 54 angeordnet.

Im Ausführungsbeispiel nach Figur 4 sind zwei pneumatisch vorsteuerbare Wegeventile 58 auf einer Sammelanschlußplatte 59 angeordnet. Gleiche Teile wie zuvor sind wieder mit denselben Ziffern bezeichnet. Die Steueranschlüsse 60, 61 des Wegeventils 58 sind an der Oberseite eines Gehäuses 62 in der Ebene der Verbraucheranschlüsse 43, 44 ausgebildet. Die Sammelanschlußplatte 59 hat drei parallel verlaufende Bohrungen, eine mittige Zulaufbohrung 63, die Verbindung mit dem Zuluftanschluß 42 hat, und zwei Entlüftungsbohrungen 64, 65, die in Verbindung mit den Entlüftungsanschlüssen 45, 46 stehen. Im Entlüftungsanschluß 45 befindet sich ein Leichtspannstift 66, der bei der Montage zur Fixierung des Gehäuses 62 auf der Sammelanschlußplatte 59 dient. Die Übergangsstellen zwischen Sammelanschlußplatte 59 und Gehäuse 62 sind durch in dafür vorgesehene Ausnehmungen 67 eingelegte Dichtringe 68 abgedichtet.

Die Wirkungsweise der Wegeventile 11 und 58 ist allgemein bekannt und deshalb nicht näher erläutert.

**Patentansprüche**

1. Wegeventil (11, 58), insbesondere für Druckluftbetrieb, mit einem Anschlußkörper (51, 59) und einem Ventilgehäuse (10, 62), das mit Hilfe von das Ventilgehäuse (10, 62) durchdringenden Schrauben (49) auf dem Anschlußkörper (51, 59) befestigbar ist und in dem ein Steuerschieber (32) angeordnet ist, der Druckmittel von wenigstens einer Zulaufkammer (16) zu mehreren Steuerkammern (27, 28) und mehreren Verbraucherkammern (29, 30) steuert, dadurch gekennzeichnet, daß im Ventilgehäuse (10, 62) eine Stufenbohrung (12) ausgebildet ist, in der sich mehrere Führungsscheiben (21, 22, 23) im Abstand voneinander befinden, in deren gleich großen Bohrungen (24) der Steuerschieber (32) geführt ist, und daß die Durchdringungen für die Schrauben (49) im Bereich (19) des kleinsten Durchmessers der Stufenbohrung (12) etwa quer zur Stufenbohrung (12) verlaufend angeordnet sind.

2. Wegeventil nach Anspruch 1, dadurch gekennzeichnet, daß die Räume zwischen den Führungsscheiben (21, 22, 23) Verbraucherkammern (29, 30) und Steuerkammern (27, 28) sind.

3. Wegeventil nach Anspruch 1 und/oder 2, dadurch gekennzeichnet, daß die Zulaufkammer (16) einen wesentlich kleineren Durchmesser als die übrigen Kammern (27, 28, 29, 30) aufweist.

4. Wegeventil nach einem der Ansprüche 1 bis 3, dadurch gekennzeichnet, daß die Zulaufkammer (16) im Bereich (15) des kleinsten Durchmessers der Stufenbohrung (12) ausgebildet ist.

5. Wegeventil nach einem der Ansprüche 1 bis 4, dadurch gekennzeichnet, daß zwei Schrauben (49) diagonal zu einer gedachten, mittig zwischen den Verbraucheranschlüssen (43, 44) verlaufenden Achse (48) angeordnet sind.

6. Wegeventil nach einem der Ansprüche 1 bis 5, dadurch gekennzeichnet, daß die Schrauben (49) von der Verbraucheranschlußseite einführbar sind.

7. Wegeventil nach einem der Ansprüche 1 bis 6, dadurch gekennzeichnet, daß in wenigstens einem der Entlüftungsanschlüsse (45) ein Spannstift (66) angeordnet ist, der in eine zugeordnete Bohrung in einer Anschlußplatte (59) eingreift.

8. Wegeventil nach einem der Ansprüche 1 bis 7, dadurch gekennzeichnet, daß die Führungsscheiben (21, 22, 23) in der Stufenbohrung (12) eingeklebt sind.

9. Wegeventil nach einem der Ansprüche 1 bis 8, dadurch gekennzeichnet, daß in den Führungsscheiben (21, 22, 23) in Ausnehmungen (25) Dichtringe (26) angeordnet sind.

**Claims**

1. Directional valve (11, 58), especially for compressed-air operation, with a connecting body (51, 59) and a valve housing (10, 62) which can be fastened to the connecting body (51, 59) by means of screws (49) passing through the valve housing (10, 62), and in which is arranged a control slide (32) controlling the flow of pressure medium from at least one inflow chamber (16) to several control chambers (27, 28) and several consumer chambers (29, 30), characterized in that in the valve housing (10, 62) is made a stepped bore (12), in which several guide discs (21, 22, 23) are located at a distance from one another, the control slide (32) being guided in bores (24) of the same size in these, and in that the passages for the screws (49) are arranged in the region (19) of least diameter of the stepped bore (12) and extend approximately transversely relative to the stepped bore (12).

2. Directional valve according to claim 1, characterized in that the spaces between the guide discs (21, 22, 23) are consumer chambers (29, 30) and control chambers (27, 28).

3. Directional valve according to claim 1 and/or 2, characterized in that the inflow chamber (16) has a substantially smaller diameter than the remaining chambers (27, 28, 29, 30).

4. Directional valve according to one of claims 1 to 3, characterized in that the inflow chamber (16) is formed in the region (15) of least diameter of the stepped bore (12).

5. Directional valve according to one of claims 1 to 4, characterized in that two screws (49) are arranged diagonally relative to an imaginary axis (48) extending centrally between the consumer connections (43, 44).

6. Directional valve according to one of claims 1 to 5, characterized in that the screws (49) can be inserted from the consumer connection side.

7. Directional valve according to one of claims 1 to 6, characterized in that a dowel pin (66) is arranged in at least one of the relief connections (45) and engages into an associated bore in a connection plate (59).

8. Directional valve according to one of claims 1 to 7, characterized in that the guide discs (21, 22, 23) are glued in the stepped bore (12).

9. Directional valve according to one of claims 1 to 8, characterized in that sealing rings (26) are arranged in recesses (25) in the guide discs (21, 22, 23).

**Revendications**

1. Soupape directionnelle (11, 58) prévue notamment pour fonctionner à l'air comprimé, avec une structure de raccordement (51, 59) et un boîtier de soupape (10, 62), qui est susceptible d'être fixé sur la structure de raccordement (51, 59) à l'aide de vis (49) traversant le boîtier (10, 62) de la soupape, soupape dans laquelle est disposée un tiroir de commande (32) qui contrôle le fluide sous pression en provenance d'au moins une chambre d'arrivée (16) vers plusieurs chambres de commande (27, 28) et plusieurs chambres de dispositifs utilisateurs (29,30), soupape directionnelle caractérisée en ce que dans le boîtier (10, 62) de la soupape, est ménagé un alésage épaulé (12) dans lequel se trouvent plusieurs rondelles de guidage (21, 22, 23) disposées à une certaine distance les unes des autres, le tiroir de commande (32) étant guidé dans les perçages (24), de mêmes dimensions, de ces rondelles, tandis que les perçages traversant pour les vis (49) sont disposés dans la zone (19) du plus petit diamètre de l'alésage épaulé (12), à peu près transversalement par rapport à cet alésage épaulé (12).

2. Soupape directionnelle selon la revendication 1, caractérisée en ce que les chambres entre les rondelles de guidage (21, 22, 23) sont des chambres de dispositifs utilisateurs (29, 30) et des chambres de commande (27, 28).

3. Soupape directionnelle selon la revendication 1 et/ou 2, caractérisée en ce que la chambre d'arrivée (16) a un diamètre notablement plus réduit que les autres chambres (27, 28, 29, 30).

4. Soupape directionnelle selon une des revendications 1 à 3, caractérisée sn ce que la chambre d'arrivée (16) est ménagée dans la zone (15) de plus petit diamètre de l'alésage épaulé (12).

5. Soupape directionnelle selon une des revendications 1 à,4, caractérisée en ce que deux vis (49) sont disposées diagonalement par rapport à un axe supposé (48) placé au milieu entre les raccordements (43, 44) du dispositif utilisateur.

6. Soupape directionnelle selon une des revendications 1 à 5, caractérisée en ce que les vis (49) sont susceptibles d'être introduites à partir du côté de raccordement des dispositifs utilisateurs.

7. Soupape directionnelle selon une des revendications 1 à 6, caractérisée en ce qu'une goupille élastique (66) est disposée dans au moins un des raccordements de purge (45), cette goupille venant en prise dans un perçage correspondant d'une plaque de raccordement (59).

8. Soupape directionnelle selon une des revendications 1 à 7, caractérisée en ce que les rondelles de guidage (21, 22, 23) sont collées dans l'alésage épaulé (12).

9. Soupape directionnelle selon une des revendications 1 à 8, caractérisée en ce que des joints toriques d'étanchéité (26) sont disposés dans des évidements (25) dans les rondelles de guidage (21, 22, 23).

Fig. 1

Fig. 3

49    10

54    54

52    51    53

48

49    53

Fig. 2

S    R

43    44

B    A 47

S    R

B    A

0 152 620

Fig. 5

Fig. 4

Fig. 6

5